# EUROPEAN PATENT SPECIFICATION

(11) **EP 3 244 111 B1**
(45) Date of publication and mention of the grant of the patent: **02.09.2020**
(21) Application number: 16169475.7
(22) Date of filing: 13.05.2016
(51) Int. Cl.: F16L 23/06, F16L 37/20

(54) **SNAP-FIT POSITIONING STRUCTURE FOR PIPE JOINTS**
EINRASTENDE POSITIONIERUNGSSTRUKTUR FÜR ROHRVERBINDUNGEN
STRUCTURE DE POSITIONNEMENT À ENCLIQUETAGE POUR RACCORDS DE TUYAUX

(43) Date of publication of application: 15.11.2017
(73) Proprietor: Chen, Tsan-Jee, Taipei City 114 (TW)
(72) Inventor: Chen, Tsan-Jee, Taipei City 114 (TW)
(74) Representative: Wittmann, Günther

(56) References cited:
- EP-A2- 2 757 297
- CN-U- 203 770 888
- US-A1- 2008 136 167

## Description

### BACKGROUND OF THE INVENTION

### 1. Field of the Invention

The present invention generally relates to a snap-fit positioning structure for pipe joints; in particular, it relates to a snap-fit structure capable of enabling a tightly snap-fitted connection between two pipe joints and preventing loose and detachment issues at the connection portion of such two pipe joints.

### 2. Description of Related Art

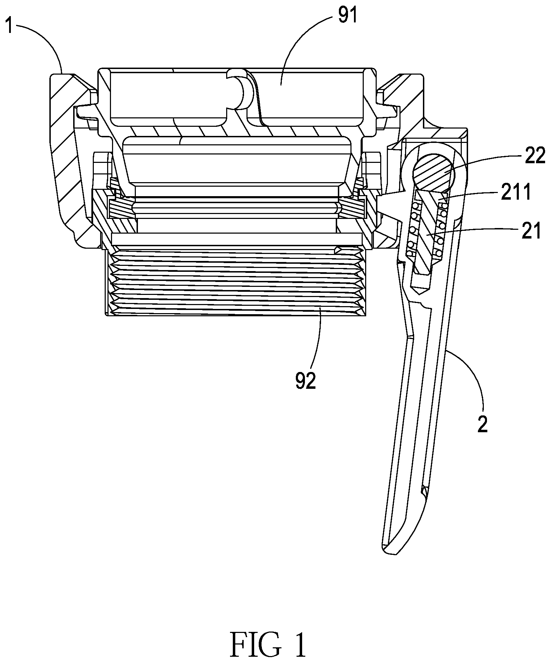

It is known that, in connecting two pipes, typically two opposite pipe joints can be sleeve jointed with each other and then firmly secured by means of a simple adaptor snap-fit structure thus completing the fixation process. One of the examples for this kind of conventional snap-fit structure may be shown in Figure 1, wherein, when the snap-fit handle 2 is in the lockup state, it is approximately perpendicular with respect to the adaptor body 1, and the top surface on the cap edge 211 of the positioning member 21 abuts against the edge of the pivotal connection shaft 22 such that the snap-fit handle 2 can be secured in position thereby allowing the snap-fit handle 2 to be snap fitted onto the pipe joints so that the two pipe joints 91, 92 can be tightly combined without separation.

However, with the aforementioned structure, it can be seen that, since the cap edge 211 simply abuts against the edge of the pivotal connection shaft 22, upon pulling or moving the snap-fit handle 2 towards the direction away from the adaptor body 1, it may accidentally cause the cap edge 211 to fail to keep abutting against the edge of the pivotal connection shaft 22, thus undesirably loosening the snap-fit handle 2; moreover, in case of vibrations or impacts due to certain external forces, unexpected slack or detachment problems between such two connected pipe joints 91, 92 may occur, thus leading to flow leakages from the transfer pipes, which could probably pollute the environment and lead to direct harms or losses to people as well as property.

Consequently, it would be an optimal solution if it is possible to employ a better stabilized snap-fit structure so that the snap-fit connection between the two pipe joints 91, 92 can be firmly maintained without slack or detachment issues caused by no matter human factors, vibrations or impacts from external forces, thus reducing or eliminating the possibility of transfer flow leakages.

CN 203 770 888 U discloses a snap-fit positioning structure for pipe joints, comprising an annular adaptor body, a snap-fit handle, a push board, a pivotal connection shaft and a single latch pin assembly.

### SUMMARY OF THE INVENTION

The invention is directed to a snap-fit positioning structure for pipe joints according to appended claim 1.

In a preferred embodiment, the adaptor body is a wider-top-narrower-bottomed annular body, with a ledge extending inwardly at the bottom thereof.

In a preferred embodiment, the movement space formed about the surrounding area of a sidewall surface on the handle body at the accommodation hole has a recessed structure.

In a preferred embodiment, a push-in standard position marking is set up on the handle body and a push-in position mark is also installed on the positioning plate such that it is necessary to place the push-in position mark and push-in standard position marking at the same height when pushing up the plate body, and in the case that the push-in position mark is aligned with the push-in standard position marking, it indicates the top surface on the positioning plate of the push plate body has abutted against the inside of the first positioning groove.

In a preferred embodiment, a generally vertical first abutting surface and a second abutting surface are formed on the shaft body of the pivotal connection shaft, in which the first abutting surface and the second abutting surface are located near the center of the shaft body thus allowing to be abutted against by the upper latch pin component.

In a preferred embodiment, to switch the snap-fit handle from the lockup state to the unlock state, it is required to displace the push board downwardly a distance such that the top surface of the positioning plate on the push plate body can detach from the first positioning groove, then move the push board upwardly so that the upper latch pin component can transit from the first abutting surface to move and abut against the second abutting face, and when the top surface of the positioning plate on the push plate body abuts against the inside of the second positioning groove, it is possible to allow the snap member of the snap-fit handle to leave from the inside of the snap hole in the adaptor body.

In a preferred embodiment, to switch the snap-fit handle from the unlock state to the lockup state, it is required to displace the push plate body downwardly a distance such that, by means of the guiding surface on the positioning plate of the push plate body, the top surface of the positioning plate on the push plate body can detach from the inside of the second positioning groove in order to displace the snap-fit handle, and the upper latch pin component can transit from the second abutting surface to move and abut against the first abutting face, and when the top surface of the positioning plate on the push plate body abuts against the inside of the first positioning groove, it is possible to insert the top surface of the push plate body into the first positioning groove of the pivotal connection shaft by using the elastic force from the elastic component thus firmly inserting the snap-fit handle into the snap hole of the adaptor body.

In a preferred embodiment, the guiding surface is an inclined surface operating collaboratively with the curved outer surface of the pivotal connection shaft.

### BRIEF DESCRIPTION OF THE DRAWINGS

Figure 1 shows a cross-section structure view of the conventional snap-fit structure applied for pipe joints.
Figure 2A shows a structural disassembly view of the snap-fit positioning structure for pipe joints according to the present invention.
Figure 2B shows a structural assembly view of the snap-fit positioning structure for pipe joints according to the present invention.
Figure 3A shows a cross-section view for an embodiment of the snap-fit positioning structure for pipe joints according to the present invention.
Figure 3B shows a cross-section view for an embodiment of the snap-fit positioning structure for pipe joints according to the present invention.
Figure 4A shows a cross-section view for an embodiment applied on joining two pipe joints in the unlock state of the snap-fit positioning structure for pipe joints according to the present invention.
Figure 4B shows a cross-section view for an embodiment applied on joining two pipe joints in the lockup state of the snap-fit positioning structure for pipe joints according to the present invention.
Figure 5A shows a view for an embodiment on locking up the snap-fit positioning structure for pipe joints according to the present invention.
Figure 5B shows a view for an embodiment on unlocking the snap-fit positioning structure for pipe joints according to the present invention.
Figure 5C shows a view for an embodiment on unlocking the snap-fit positioning structure for pipe joints according to the present invention.

### DETAILED DESCRIPTION OF THE PREFERRED EMBODIMENTS

Other technical contents, aspects and effects in relation to the present invention can be clearly appreciated through the detailed descriptions concerning the preferred embodiments of the present invention in conjunction with the appended drawings.

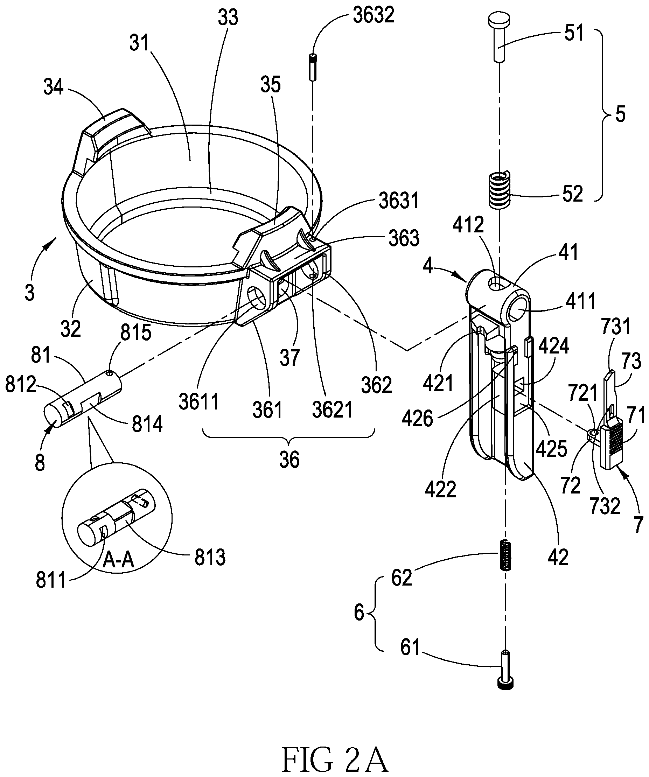

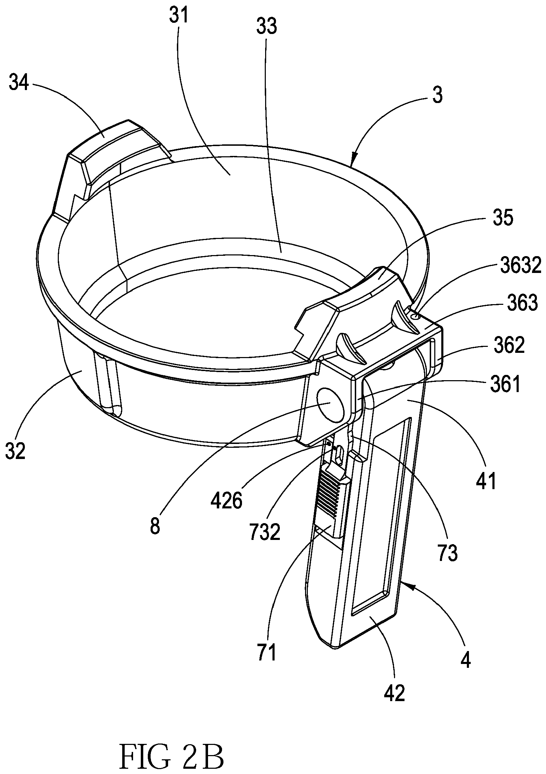

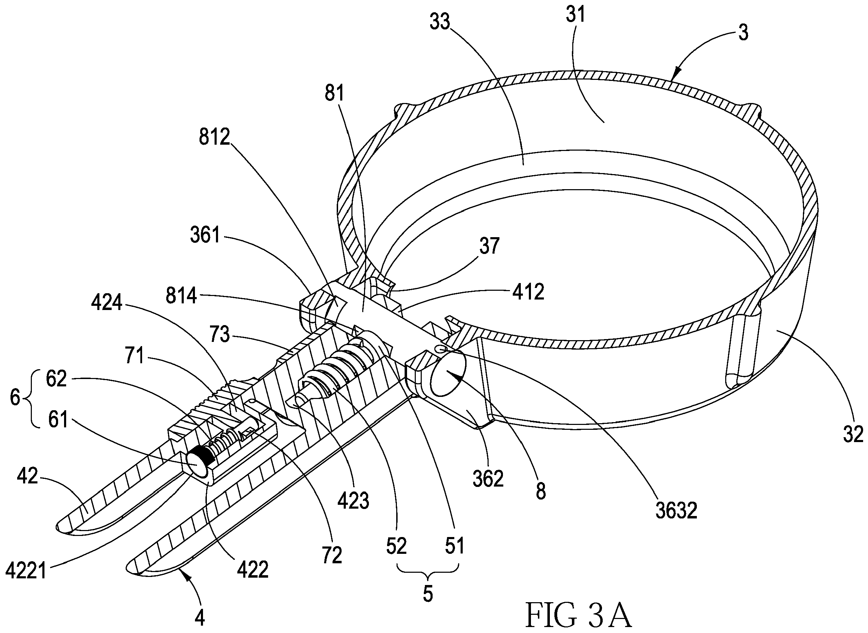

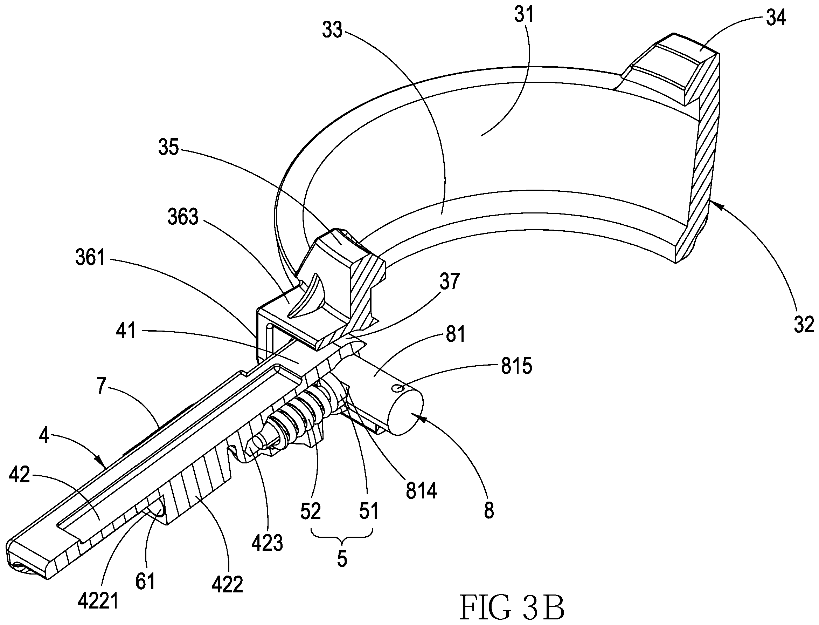

Refer initially to Figures 2A, 2B, 3A and 3B, wherein a disassembly structure view, an assembly structure view, an embodiment in the unlock state of the snap-fit positioning structure for pipe joints according to the present invention are respectively shown. It can be observed from the Figures that the adaptor body 3 is a wider-top-narrower-bottomed annular body and a ledge 33 extends inwardly at the bottom thereof, wherein the adaptor body 3 includes an inner wall surface 31 and an outer wall surface 32, two corresponding buckles 34, 35 are configured on a top surface, the outer wall surface 32 has a pivotal connection seat 36, the pivotal connection seat 36 has two corresponding lugs 361, 362 and a cover 363 connecting the top surfaces of such two lugs 361, 362, such that an accommodation space is formed between the two lugs 361, 362 and the cover 363, and a first through-hole 3611 and corresponding second through-hole 3621 are respectively configured on the lugs 361 and 362, a mounting hole 3631 is configured on the cover 363, and the wall surface of the adaptor body 3 corresponding to the accommodation space has a snap hole 37.

In addition, the pivotal connection seat 36 of the adaptor body 3 is connected to a snap-fit handle 4 which includes a head part 41 and a handle body 42, wherein the head part 41 has a horizontal shaft hole 411 and a head part through-hole 412, a snap member 421 extending from the handle body (42) towards the adaptor body (3) and a mounting part 422 having a mounting part through-hole 4221 and the inside of the handle body 42 is also configured with a vertical channel 423 corresponding to the head part through-hole 412; moreover, a sidewall surface of the handle body 42 is configured with an accommodation hole 424 penetrating into the mounting part 422, and the surrounding area of a sidewall surface on the handle body 42 at the accommodation hole 424 is further formed with a movement space 425, such that the head part 41 of the snap-fit handle 4 can be combined into the accommodation space in the pivotal connection seat 36 of the adaptor body 3 thereby allowing the horizontal shaft hole 411 of the head part 41 to correspond to the first through-hole 3611 and the second through-hole 3621 respectively on the two lugs 361, 362 of the adaptor body 3.

Furthermore, an upper latch pin assembly 5 may further penetrate into the head part through-hole 412 of the head part 41, and the upper latch pin assembly 5 comprises an upper latch pin component 51 and an elastic component 52, in which the elastic component 52 can be sleeve placed onto the upper latch pin component 51 and inserted into the vertical channel 423 of the handle body 42 via the head part through-hole 412 on the head part 41 of the snap-fit handle 4.

Besides, a push board 7 can vertically move within the movement space 425 and include a push plate body 71, an insertion plate 72 having an opening 721 extends from the push plate body 71 towards the snap-fit handle 4 so as to penetrate into the accommodation hole 424 on a sidewall surface of the handle body 42, and a positioning plate 73 extends upwardly from the push plate body 71, wherein the top surface 731 of the positioning plate 73 acts as a guiding surface (the movement space 425 has a narrower-top-wider-bottomed structure, and the structural width at the narrower portion thereof corresponds to the width of the positioning plate 73), and the guiding surface may be an inclined surface.

Additionally, a lower latch pin assembly 6 may further penetrate the mounting part through-hole 4221 on the mounting part 422 of the handle body 42, which includes a lower latch pin component 61 and an elastic component 62, wherein the elastic component 62 of the lower latch pin assembly 6 can be sleeve placed onto the lower latch pin component 61 and inserted into the accommodation hole 424 of the handle body 42 via the mounting part through-hole on the mounting part 422 of the handle body 42 so that the front end of the lower latch pin component 61 can go through the opening 721 of the insertion plate 72 on the push board 7.

Also, a pivotal connection shaft 8 can penetrate the first through-hole 3611 and second through-hole 3621 on the lugs 361, 362 of the adaptor body 3 as well as the horizontal shaft hole 411 in the head part 41 of the snap-fit handle 4 (and then further through the mounting hole 3631 and the first positioning hole 815 by means of a stationary axle 3632 so as to fix the pivotal connection shaft 8 into the pivotal connection seat 36 of the adaptor body 3 without rotation), in which a first positioning groove 811 (see A-A in Figure 2A), a second positioning groove 812, a first abutting surface 813 (see A-A in Figure 2A), a second abutting surface 814 and a first positioning hole 815 are configured on the shaft body 81 of the pivotal connection shaft 8, and the first positioning groove 811 and the second positioning groove 812 are located on one side of the shaft body 81 of the pivotal connection shaft 8, while the first positioning hole 815 located on the other side of the shaft body 81 of the pivotal connection shaft 8.

Herein the pivotal connection shaft 8 allows the snap-fit handle 4 to rotate on the pivotal connection seat 36 of the adaptor body 3; meanwhile, by controlling the up-down movement of the push board 7, it is possible to switch between the lockup state or unlock state in the snap member 421 of the snap-fit handle 4 and allow the snap member 421 to penetrate into or depart from the inside of the snap hole 37 in the adaptor body 3.

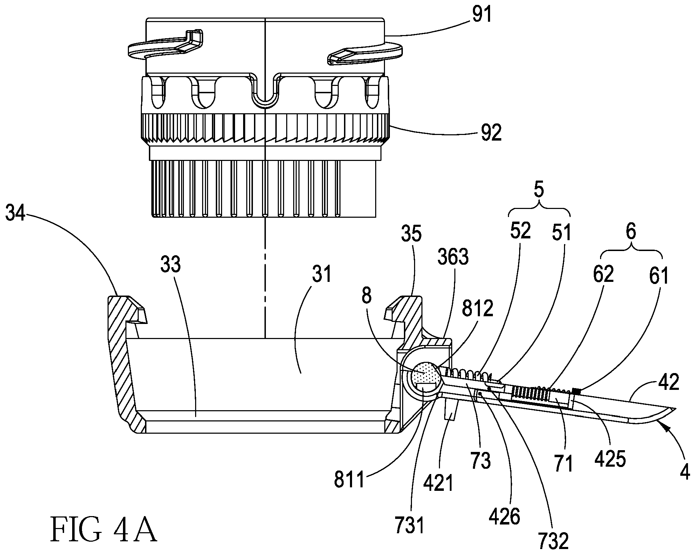

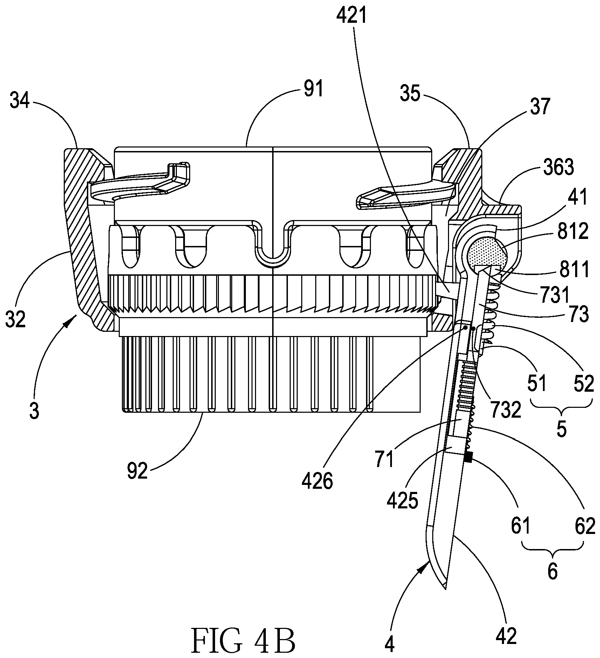

Upon placing the two pipe joints 91, 92 into the adaptor body 3 for fixation, as shown in Figures 4A and 4B, at first the snap-fit handle 4 should be in the unlock state, then, after connecting the two pipe joints 91, 92, the adaptor body 3 can be sleeve installed onto the two connected pipe joints 91, 92, then the snap-fit handle 4 is pulled downwardly, as shown in Figure 3B, so that the buckles 34, 35 of the adaptor body 3 can be snap fixed onto the pipe joints 91, 92, wherein, when the snap-fit handle 4 is in the lockup state and perpendicular with respect to the adaptor body 3, the snap member 421 of the snap-fit handle 4 can be inserted into the snap hole 37 of the adaptor body 3; under such a circumstance, the upper latch pin component 51 abuts against the first abutting surface 813 and the snap-fit handle 4 is in the lockup state because the top surface 731 of the positioning plate 73 in the push plate body 71 can insert and abut against the inside of the first positioning groove 711 such that the snap-fit handle 4 is snap latched in position and unable to rotate.

It should be noticed that the positioning plate 73 of the push plate body 71 has to be elevated to a certain extent in order to allow the top surface 731 to effectively abut against the inside of the first positioning groove 811. Hence, for user's convenience, a push-in standard position marking 426 is denoted on the handle body 42 (indicated by a black dot in the present embodiment, but can be a line segment or other marks to indicate the required standard push-in position), and the positioning plate 73 includes a push-in position mark 732 as well (indicated by a black dot in the present embodiment, but can be a line segment or other marks to represent the position currently being pushed in). Therefore, when a user pushes upwardly the push plate body 71, it is necessary to make the push-in position mark 732 and the push-in standard position marking 426 locate at the same height; as the push-in position mark 732 aligns to the push-in standard position marking 426, this means the top surface 731 of the positioning plate 73 on the push plate body 71 now enters into and abuts against the inside of the first positioning groove 811.

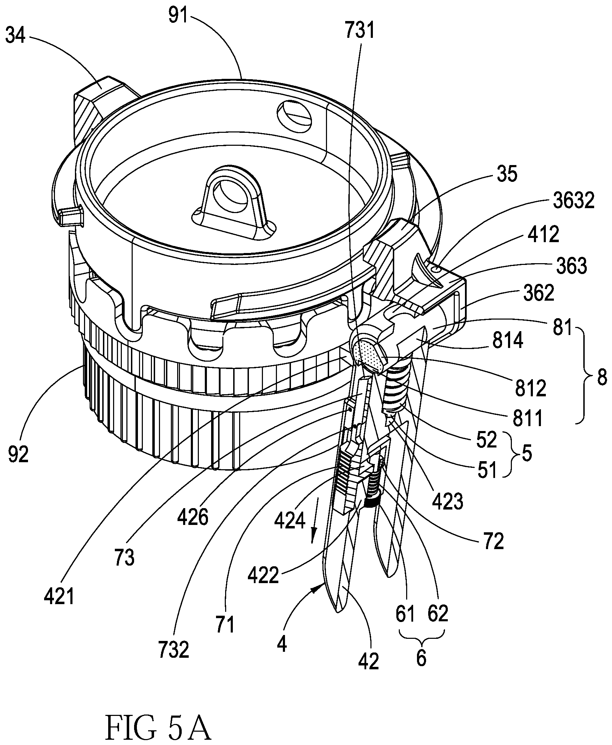

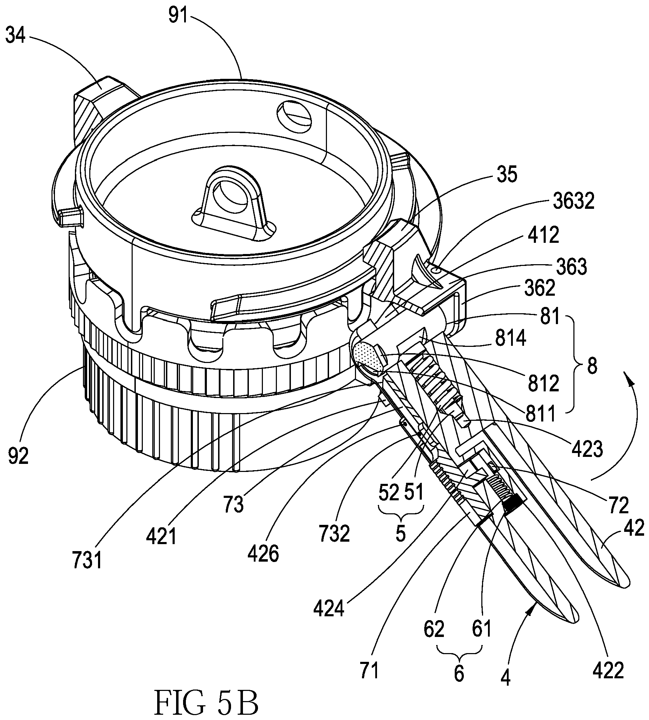

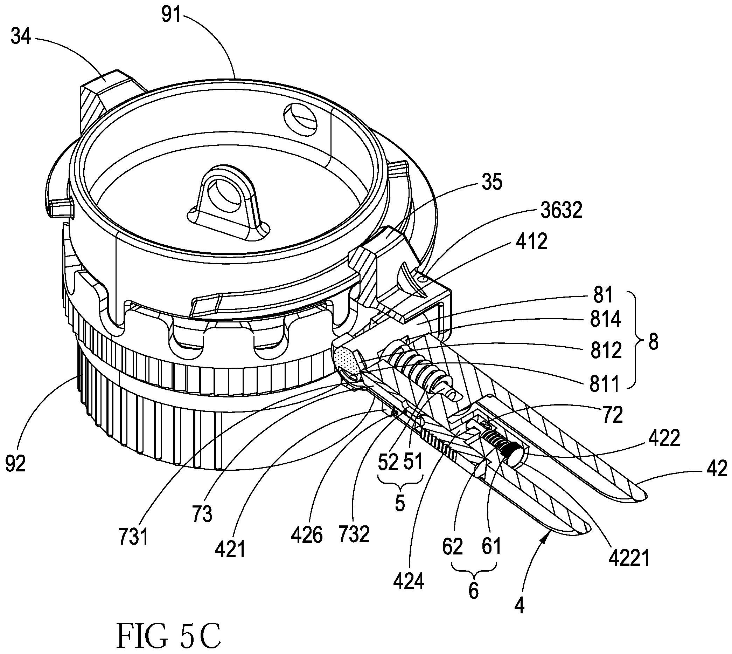

Upon switching the snap-fit handle 4 from the lockup state to the unlock state, as shown in Figure 5A, it requires to move the push plate body 71 of the push board 7 downwardly a distance such that the top surface 731 on the positioning plate 73 of the push plate body 71 can leave from the first positioning groove 811. In such a state, the elastic components 52, 62 will be flexibly squeezed. Afterwards, as shown in Figures 5B and 5C, it is possible to pull the adaptor body 3 upwardly in order to make the snap-fit handle 4 and the adaptor body 3 become horizontal, then the top surface 731 of the positioning plate 73 can abut against the second positioning groove 812; in this way, the upper latch pin component 51 contacts the second abutting surface 814 at this time so that the top surface 731 of the positioning plate 73 firmly abuts against the inside of the second positioning groove 812 and the upper latch pin component 51 also stably abuts against the second abutting surface 814.

Following this, to switch the snap-fit handle 4 from the unlock state to the lockup state, it needs to move the push plate body 71 of the push board 7 downwardly a distance such that the top surface on the positioning plate of the push plate body can depart from the inside of the second positioning groove. Since the top surface 731 of the positioning plate 73 operates as a guiding surface, it is possible to following the arc-wise rotation of the pivotal connection shaft 8 by means of the elastic force generated by the elastic component 52; as a result, when the top surface 731 of the positioning plate 73 engages with the first positioning groove 811 and the upper latch pin component 51 contacts the first abutting surface 813, the elastic components 52, 62 can have sufficient space for elastic restorations thereby naturally pushing the top surface 731 of the positioning plate 73 to be inserted and positioned within the first positioning groove 811 and allowing the upper latch pin component 51 to abut against the first abutting surface 813. Under such a circumstance, the snap-fit handle 4 can be perpendicular with respect to the adaptor body 3 and the snap member 421 of the snap-fit handle 4 can be inserted into the snap hole 37 of the adaptor body 3, and further snap latched onto the surface of the pipe joint 92, wherein the pipe joint 92 is fixed by means of the snap member 421, while the pipe joint 92 is secured via the buckles 34, 35 of the adaptor body 3, thus up-down mutually jointed so as to provide a tight snap connection between the two pipe joints 91, 92 thereby eliminating possible loose or detachment issues at the connection portion of such two pipe joints 91, 92.

As such, compared with other conventional technologies, the snap-fit positioning structure for pipe joints according to the present invention provides the following advantages:

The snap-fit positioning structure for pipe joints according to the present invention applies a more stable snap-fit position structure to snap fit two pipe joints in connection, and because of such a special structure, it is possible to effectively prevent the occurrence of loose or detachment issues at the connection portion of the pipe joints, no matter due to human factors, vibrations or impacts from external forces.

## Claims

1. A snap-fit positioning structure for pipe joints, comprising:
an adaptor body (3), which is an annular body and includes an inner wall surface (31) and an outer wall surface (32), wherein two corresponding buckles (34, 35) are configured on a top surface, the outer wall surface (32) has a pivotal connection seat (36), the pivotal connection seat (36) has two corresponding lugs (361, 362) and a cover (363) connecting the top surfaces of said two lugs (361, 362), such that an accommodation space is formed between the two lugs (361, 362) and the cover (363), a first through-hole (3611) and a second through-hole (3621) being respectively configured on the lugs (361) and (362), a mounting hole (3631) is configured on the cover (363), and the wall surface of the adaptor body (3) corresponding to the accommodation space has a snap hole (37),
a snap-fit handle (4), which includes a head part (41) and a handle body (42), wherein the head part (41) has a horizontal shaft hole (411), a snap member (421) extending from the handle body (42) towards the adaptor body (3) and a mounting part (422) having a mounting part through-hole (4221); wherein a sidewall surface of the handle body (42) is configured with an accommodation hole (424) penetrating into the mounting part (422), and the surrounding area of a sidewall surface on the handle body (42) at the accommodation hole (424) is further formed with a movement space (425), such that the head part (41) of the snap-fit handle (4) can be accommodated in the accommodation space in the pivotal connection seat (36) of the adaptor body (3) thereby allowing the horizontal shaft hole (411) of the head part (41) to correspond to the first through-hole (3611) and the second through-hole (3621) respectively on the two lugs (361, 362) of the adaptor body (3);
a push board (7), which includes a push plate body (71), wherein an insertion plate (72) having an opening (721) extends from the push plate body (71) towards the snap-fit handle (4) so as to penetrate into the accommodation hole (424) on a sidewall surface of the handle body (42), and a positioning plate (73) extends upwardly from the push plate body (71), wherein the top surface (731) of the positioning plate (73) acts as a guiding surface;
a lower latch pin assembly (6), which includes a lower latch pin component (61) and an elastic component (62), wherein the elastic component (62) of the lower latch pin assembly (6) can be sleeve placed onto the lower latch pin component (61) and inserted into the accommodation hole (424) via the mounting part through-hole (4221) on the mounting part (422) of the handle body (42) such that the front end of the lower latch pin component (61) can go through the opening (721) of the insertion plate (72) on the push board (7);
a pivotal connection shaft (8) having a shaft body (81), in which a first positioning groove (811), a second positioning groove (812) and a first positioning hole (815) are configured on the shaft body (81) of the pivotal connection shaft (8), and the first positioning groove (811) and the second positioning groove (812) are located on one side of the shaft body (81) of the pivotal connection shaft (8), while the first positioning hole (815) is located on the other side of the shaft body (81) of the pivotal connection shaft (8);
wherein the pivotal connection shaft (8) penetrates through the first through-hole (3611) and second through-hole (3621) on the lugs (361, 362) of the adaptor body (3) as well as the horizontal shaft hole (411) on the head part of the snap-fit handle (4) such that the snap-fit handle can rotate on the pivotal connection seat (36) of the adaptor body (3), thereby controlling the up-down transition of the push board (7) to switch between the lockup state or unlock state of the snap-fit handle (4) so as to allow the snap member (421) to penetrate into or depart from the snap hole (37) of the adaptor body (3); and
wherein the head part (41) of the snap-fit handle (4) has a head part through-hole (412), the inside of the handle body (42) includes a vertical channel (423) corresponding to the head part through-hole (412)**,** the head part through-hole (412) cooperates with an upper latch pin assembly (5), wherein the upper latch pin assembly (5) comprises an upper latch pin component (51) and an elastic component (52), in which the elastic component (52) can be sleeve placed onto the upper latch pin component (51) and inserted into the vertical channel (423) of the handle body (42) via the head part through-hole (412) on the head part (41) of the snap-fit handle (4).

2. The snap-fit positioning structure for pipe joints according to Claim 1, wherein the adaptor body (3) is a wider-top-narrower-bottomed annular body, with a ledge (33) extending inwardly at the bottom thereof.

3. The snap-fit positioning structure for pipe joints according to Claim 1, wherein the movement space (425) formed about the surrounding area of a sidewall surface on the handle body (42) at the accommodation hole (424) has a recessed structure.

4. The snap-fit positioning structure for pipe joints according to Claim 1, wherein a push-in standard position marking (426) is arranged on the handle body (42) and a push-in position mark (732) is also installed on the positioning plate (73) such that it is necessary to place the push-in position mark (732) and push-in standard position marking (426) at the same height when pushing up the plate body (71); such that in the case the push-in position mark (732) is aligned with the push-in standard position marking (426), it indicates the top surface (731) on the positioning plate (73) of the push plate body (71) has abutted against the inside of the first positioning groove (811).

5. The snap-fit positioning structure for pipe joints according to Claim 1, wherein a generally vertical first abutting surface (813) and a second abutting surface (814) are formed on the shaft body (81) of the pivotal connection shaft (8), in which the first abutting surface (813) and the second abutting surface (814) are located near the center of the shaft body (81) thus allowing to be abutted against by the upper latch pin component (51).

6. The snap-fit positioning structure for pipe joints according to Claim 5, wherein, to switch the snap-fit handle (4) from the lockup state to the unlock state, it is required to displace the push board (7) downwardly a distance such that the top surface (731) of the positioning plate (73) on the push plate body (71) can detach from the first positioning groove (811), then move the push board (7) upwardly so that the upper latch pin component (51) can transit from the first abutting surface (813) to move and abut against the second abutting face (814), and when the top surface (731) of the positioning plate (73) on the push plate body (71) abuts against the inside of the second positioning groove (812), it is possible to allow the snap member (421) of the snap-fit handle (4) to depart from the inside of the snap hole (37) in the adaptor body (3).

7. The snap-fit positioning structure for pipe joints according to Claim 5, wherein, to switch the snap-fit handle (4) from the unlock state to the lockup state, it is required to displace the push plate body (71) downwardly a distance such that, by means of the guiding surface on the positioning plate (73) of the push plate body (71), the top surface (731) of the positioning plate (73) on the push plate body (71) can detach from the inside of the second positioning groove (812) in order to displace the snap-fit handle (4), and the upper latch pin component (51) can transit from the second abutting surface (814) to move and abut against the first abutting face (813), and when the top surface (731) of the positioning plate (73) on the push plate body (71) abuts against the inside of the first positioning groove (811), it is possible to insert the top surface (731) of the push plate body (71) into the first positioning groove (811) of the pivotal connection shaft (8) by using the elastic force from the elastic component (62) thus firmly inserting the snap-fit handle (4) into the snap hole (37) of the adaptor body (3).

8. The snap-fit positioning structure for pipe joints according to Claim 7, wherein the top surface (731) of the positioning plate (73) is an inclined guiding surface operating collaboratively with the curved outer surface of the pivotal connection shaft (8).

## Patentansprüche

1. Schnappverschlusspositionierungsstruktur für Rohrverbindungen, aufweisend:
einen Adapterkörper (3), der ein ringförmiger Körper ist und eine innere Wandoberfläche (31) und eine äußere Wandoberfläche (32) aufweist, wobei zwei entsprechende Schellen (34, 35) an einer oberen Oberfläche ausgestaltet sind, wobei die äußere Wandoberfläche (32) einen schwenkbaren Verbindungssitz (36) aufweist, wobei der schwenkbare Verbindungssitz (36) zwei entsprechende Ösen (361, 362) und eine Abdeckung (336) aufweist, die die oberen Oberflächen der zwei Ösen (361, 362) so verbindet, dass ein Aufnahmeraum zwischen den zwei Ösen (361, 362) und der Abdeckung (363) gebildet ist, wobei ein erstes Durchgangsloch (3611) und ein zweites Durchgangsloch (3621) entsprechend auf den Ösen (361) und (362) ausgebildet sind, wobei eine Anbringungsöffnung (3631) auf der Abdeckung (363) ausgebildet ist und die Wandoberfläche des Adapterkörpers (3), der dem Aufnahmeraum entspricht, eine Schnappöffnung (37) aufweist;
ein Schnappverbindungsgriff (4), der einen Kopfteil (41) und einen Griffkörper (42) umfasst, wobei der Kopfteil (41) eine horizontale Schaftöffnung (411), ein Schnappelement (421), das sich von dem Griffkörper (42) in Richtung Adapterkörper (3) erstreckt, und ein Anbringungsteil (422) mit einer Anbringungsteildurchgangsöffnung (4221) aufweist;
wobei eine Seitenwandoberfläche des Griffkörpers (42) mit einer Aufnahmeöffnung (424), die das Anbringungsteil (422) durchdringt, ausgebildet ist, und der Umgebungsbereich der Seitenwandoberfläche auf dem Griffkörper (42) an der Anbringungsöffnung (424) ferner mit einem Bewegungsraum (425) ausgestaltet ist, so dass der Kopfteil (41) des Schnappverbindungsgriffes (4) in dem Aufnahmeraum in dem Schwenkverbindungssitz (36) des Adapterkörpers (3) aufgenommen werden kann, um dadurch zu ermöglichen, dass die horizontale Schaftöffnung (411) des Kopfteils (41) mit der ersten Durchgangsöffnung (3611) beziehungsweise der zweiten Durchgangsöffnung (3621) auf den zwei Ösen (361, 362) des Adapterkörpers (3) korrespondiert;
ein Schiebeelement (7), das einen Schiebeplattenkörper (71) aufweist, wobei eine Einführungsplatte (72) mit einer Öffnung (721) von dem Schiebeplattenkörper (71) in Richtung Schnappverbindungsgriff (4) ragt, um in die Aufnahmeöffnung (424) auf einer Seitenwandoberfläche des Griffkörpers (42) einzudringen, und eine Positionsierungsplatte (73) erstreckt sich aufwärts von dem Schiebeplattenkörper (71), wobei die obere Oberfläche (731) der Positionsierungsplatte (73) als eine Führungsoberfläche wirkt;
eine untere Riegelstiftanordnung (6), die ein unteres Riegelstiftbauteil (61) und ein elastisches Bauteil (62) umfasst, wobei das elastische Bauteil (62) der unteren Verriegelungsstiftanordnung (6) eine Buchse sein kann, die auf das untere Verriegelungsstiftbauteil (61) platziert werden kann und in die Aufnahmeöffnung (424) mittels der Anregungsteildurchgangsöffnung (4221) auf dem Anbringungsteil (422) des Griffkörpers (42) eingeführt werden kann, so dass das vordere Ende des unteren Verriegelungsstiftbauteils (61) durch die Öffnung (721) der Einführungsplatte (72) des Schiebeelements (7) gehen kann;
einen Schwenkverbindungsschaft (8) mit einem Schaftkörper (81), bei dem eine erste Positionsierungsnut (811), eine zweite Positionsierungsnut (812) und eine erste Positionierungsöffnung (815) auf dem Schaftkörper (81) des Schwenkverbindungsschaftes (8) ausgestaltet sind und die erste Positionierungsnut (811) und die zweite Positionsierungsnut (812) an einer Seite des Schaftkörpers (81) des Schwenkverbindungsschaftes (8) angeordnet sind, wobei die erste Positionierungsöffnung (815) an der anderen Seite des Schaftkörpers (81) des Schwenkverbindungschaftes (8) angeordnet sind;
wobei der Schwenkverbindungsschaft (8) durch die erste Durchgangsöffnung (3611) und durch die zweite Durchgangsöffnung (3621) an den Ösen (361, 362) des Adapterkörper (3) sowie durch die horizontale Schaftöffnung (411) auf dem Kopfteil des Schnappverbindungsgriffes (4) dringt, so dass der Schnappverbindungsgriff an dem Schwenkverbindungssitz (36) des Adapterkörper (3) rotieren kann, um dadurch den Übergang von oben nach unten des Schiebeelementes (7) zu steuern, um zwischen einem verriegeltem Zustand oder einem nicht verriegeltem Zustand des Schnappverbindungsgriffes (4) zu schalten, um dem Schnappverbindungselement (421) zu ermöglichen, die Schnappverbindungsöffnung (37) des Adapterkörper (3) zu durchdringen und davon weg zu ragen; und
wobei das Kopfteil (41) des Schnappverbindungsgriffes (4) eine Kopfteildurchgangsöffnung (412) aufweist und wobei die Innenseite des Griffkörpers (42) einen vertikalen Kanal (423) umfasst, der der Kopfteildurchgangsöffnung (412) entspricht, wobei die Kopfteildurchgangsöffnung (412) mit einer oberen Verriegelungsstiftanordnung (5) zusammenarbeitet, wobei die obere Verriegelungsstiftanordnung (5) ein oberes Verriegelungsstiftbauteil (51) und ein elastisches Bauteil (52) aufweist, in dem das elastische Bauteil (52) buchsenartig auf dem oberen Verriegelungstiftbauteil (51) platziert sein kann und in den vertikalen Kanal (423) des Griffkörpers (42) mittels der Kopfteildurchgangsöffnung (412) des Kopfteils (41) des Schnappverbindungsgriffes (4) eingeführt sein kann.

2. Schnappverschlusspositionierungsstruktur für Rohrverbindungen nach Anspruch 1, wobei der Adapterkörper (3) ein ringförmiger Körper mit einer breiteren Oberseite und einer engeren Unterseite, mit einem nach innen ragendem Vorsprung (33) an dessen Unterseite ist.

3. Schnappverschlusspositionierungsstruktur für Rohrverbindungen nach Anspruch 1, wobei der Bewegungsraum (425), der um den Umgebungsbereich einer Seitenwandoberfläche des Griffkörpers (24) bei der Aufnahmeöffnung (424) gebildet ist, eine ausgenommene Struktur aufweist.

4. Schnappverbindungsstruktur für Rohrverbindungen nach Anspruch 1, wobei eine Einschiebe-Standardpositions-Markierung (426) auf dem Griffkörper (42) angeordnet ist und eine Einschiebe-Positions-Markierung (732) auch auf der Positionierungsplatte (73) angebracht ist, so dass es erforderlich ist, die Einfüge-Positionierungs-Markierung (732) und die Einfüge-Standardpositionierungs-Markierung (726) an derselben Höhe zu platzieren, wenn der Plattenkörper (71) nach oben geschoben wird, so dass im Fall, dass die Einfüge-Positions-Markierung (732) mit der Einfüge-Standardpositions-Markierung (726) ausgerichtet ist, sie anzeigt, dass die obere Oberfläche (731) auf der Positionsierungsplatte (73) des Schiebeplattenkörpers (71) an der Innenseite der ersten Positionsierungsnut (811) angelegt ist.

5. Schnappverschlusspositionierungsstruktur für Rohrverbindungen nach Anspruch 1, wobei eine im Allgemeinen vertikale erste Anlageoberfläche (813) und eine zweite Anlageoberfläche (814) auf dem Schaftkörper (81) des schwenkbaren Verbindungsschaftes (8) ausgebildet sind, bei dem die erste Anlageoberfläche (813) und die zweite Anlageoberfläche (814) nahe dem Zentrum des Schaftkörpers (81) angeordnet sind, um so zu ermöglichen, dass sie gegen das obere Verriegelungsstiftbauteil (51) anliegen.

6. Schnappverschlusspositionierungsstruktur für Rohrverbindungen nach Anspruch 5, wobei um den Schnappverbindungsgriff (4) von einem verriegelten Zustand zu einem entriegelten Zustand zu schalten, erforderlich ist, die Schiebeplatte (7) um einen Abstand nach unten zu versetzen, so dass die obere Oberfläche (731) der Positionierungsplatte (73) auf dem Schiebeplattenkörper (71) sich von der ersten Positionierungsnut (811) lösen kann, dann die Schiebeplatte (7) nach oben bewegt, so dass das obere Verriegelungsstiftbauteil (51) von der ersten Anlageoberfläche (813) durchqueren kann, um gegen die zweite Anlageoberfläche (814) zu bewegen und an dieser anzuliegen und, wenn die obere Oberfläche (731) der Positionierungsplatte (73) auf dem Schiebeplattenkörper (71) gegen die Innenseite der zweiten Positionierungsnut (812) anliegt, es möglich ist, dem Schnappelement (421) des Schnappverbindungsgriffes (4) zu ermöglichen, sich von der Innenseite der Schnappöffnung (37) in dem Adapterkörper (3) zu entfernen.

7. Schnappverschlusspositionierungsstruktur für Rohrverbindungen nach Anspruch 5, wobei, um den Schnappverbindungsgriff (4) von einem entriegelten Zustand zu einem verriegelten Zustand zu schalten, erforderlich ist, den Druckplattenkörper (71) nach unten eine Distanz zu versetzen, so dass mittels der Führungsoberfläche auf der Positionierungsplatte (73) des Druckplattenkörpers (71) die obere Oberfläche (731) der Positionierungsplatte (73) auf dem Druckplattenkörper (71) sich von der Innenseite der zweiten Positionierungsnut (812) lösen kann, um den Schnappverbindungsgriff (4) zu versetzen, und das obere Verriegelungsstiftbauteil (51) kann sich von der zweiten Anlageoberfläche (814) lösen, um sich zu bewegen und gegen die erste Anlagefläche (813) anzuliegen und, wenn die obere Oberfläche (731) der Positionierungsplatte (73) auf dem Druckplattenkörper (71) gegen die Innenseite der ersten Positionierungsnut (811) anliegt, möglich ist, die obere Oberfläche (731) des Druckplattenkörpers (71) in die erste Positionierungsnut (811) des Schwenkverbindungsschaftes (8) unter Verwendung der elastischen Kraft von dem elastischen Bauteil (62) einzuführen und folglich den Schnappverbindungsgriff (4) in der Schnappöffnung (37) des Adapterkörpers (3) fest einzuführen.

8. Schnappverschlusspositionierungsstruktur für Rohrverbindungen nach Anspruch 7, wobei die obere Oberfläche (731) der Positionierungsplatte (73) eine geneigte Führungsoberfläche ist, die mit der gekrümmten äußeren Oberfläche des Schwenkverbindungsschaftes (8) zusammenarbeitet.

## Revendications

1. Structure de positionnement à ajustement par encliquetage pour des raccords de tuyaux, comprenant :
un corps d'adaptateur (3), lequel corps est un corps annulaire et inclut une surface de paroi interne (31) et une surface de paroi externe (32), dans laquelle deux moyens d'attache se correspondant (34, 35) sont configurés sur une surface de sommet, la surface de paroi externe (32) comporte un siège de connexion pivotant (36), le siège de connexion pivotant (36) comporte deux oreilles se correspondant (361, 362) et un moyen de recouvrement (363) qui connecte les surfaces de sommet desdites deux oreilles (361, 362), de telle sorte qu'un espace de logement soit formé entre les deux oreilles (361, 362) et le moyen de recouvrement (363), un premier trou traversant (3611) et un second trou traversant (3621) étant respectivement configurés sur les oreilles (361) et (362), un trou de montage (3631) est configuré sur le moyen de recouvrement (363), et la surface de paroi du corps d'adaptateur (3) qui correspond à l'espace de logement comporte un trou d'encliquetage (37) ;
une poignée ou un manche à ajustement par encliquetage (4), laquelle poignée ou lequel manche inclut une partie de tête (41) et un corps de poignée ou de manche (42), dans laquelle la partie de tête (41) comporte un trou d'arbre horizontal (411), un élément d'encliquetage (421) qui s'étend depuis le corps de poignée ou de manche (42) en direction du corps d'adaptateur (3) et une partie de montage (422) qui comporte un trou traversant de partie de montage (4221) ;
dans laquelle une surface de paroi latérale du corps de poignée ou de manche (42) est configurée de manière à ce qu'elle comporte un trou de logement (424) qui pénètre à l'intérieur de la partie de montage (422), et la zone avoisinante d'une surface de paroi latérale sur le corps de poignée ou de manche (42), au niveau du trou de logement (424), est en outre formée de manière à ce qu'elle comporte un espace de mouvement (425), de telle sorte que la partie de tête (41) de la poignée ou du manche à ajustement par encliquetage (4) puisse être logée à l'intérieur de l'espace de logement dans le siège de connexion pivotant (36) du corps d'adaptateur (3), ce qui permet par voie de conséquence que le trou d'arbre horizontal (411) de la partie de tête (41) corresponde respectivement au premier trou traversant (3611) et au second trou traversant (3621) sur les deux oreilles (361, 362) du corps d'adaptateur (3) ;
un élément de poussée (7), lequel inclut un corps de plaque de poussée (71), dans laquelle une plaque d'insertion (72) qui comporte une ouverture (721) s'étend depuis le corps de plaque de poussée (71) en direction de la poignée ou du manche à ajustement par encliquetage (4) de manière à ce qu'elle pénètre à l'intérieur du trou de logement (424) sur une surface de paroi latérale du corps de poignée ou de manche (42), et une plaque de positionnement (73) s'étend vers le haut depuis le corps de plaque de poussée (71), dans laquelle la surface de sommet (731) de la plaque de positionnement (73) joue le rôle de surface de guidage ;
un assemblage d'axe de verrouillage inférieur (6), lequel assemblage inclut un composant d'axe de verrouillage inférieur (61) et un composant élastique (62), dans laquelle le composant élastique (62) de l'assemblage d'axe de verrouillage inférieur (6) peut être placé à la façon d'un manchon sur le composant d'axe de verrouillage inférieur (61) et peut être inséré à l'intérieur du trou de logement (424) via le trou traversant de partie de montage (4221) sur la partie de montage (422) du corps de poignée ou de manche (42) de telle sorte que l'extrémité avant du composant d'axe de verrouillage inférieur (61) puisse passer au travers de l'ouverture (721) de la plaque d'insertion (72) sur l'élément de poussée (7) ;
un arbre de connexion pivotant (8) qui comporte un corps d'arbre (81), dans laquelle une première gorge de positionnement (811), une seconde gorge de positionnement (812) et un premier trou de positionnement (815) sont configurés sur le corps d'arbre (81) de l'arbre de connexion pivotant (8), et la première gorge de positionnement (811) et la seconde gorge de positionnement (812) sont localisées sur un côté du corps d'arbre (81) de l'arbre de connexion pivotant (8) tandis que le premier trou de positionnement (815) est localisé sur l'autre côté du corps d'arbre (81) de l'arbre de connexion pivotant (8) ;
dans laquelle l'arbre de connexion pivotant (8) pénètre au travers du premier trou traversant (3611) et du second trou traversant (3621) sur les oreilles (361, 362) du corps d'adaptateur (3) de même qu'au travers du trou d'arbre horizontal (411) sur la partie de tête de la poignée ou du manche à ajustement par encliquetage (4) de telle sorte que la poignée ou le manche à ajustement par encliquetage puisse être entraîné(e) en rotation sur le siège de connexion pivotant (36) du corps d'adaptateur (3), d'où par voie de conséquence la commande de la transition vers le haut - vers le bas de l'élément de poussée (7) pour réaliser une commutation entre l'état de blocage et l'état de déblocage de la poignée ou du manche à ajustement par encliquetage (4) de manière à permettre que l'élément d'encliquetage (421) pénètre à l'intérieur du trou d'encliquetage (37) du corps d'adaptateur (3) ou s'en dégage ; et
dans laquelle la partie de tête (41) de la poignée ou du manche à ajustement par encliquetage (4) comporte un trou traversant de partie de tête (412), l'intérieur du corps de poignée ou de manche (42) inclut un canal vertical (423) qui correspond au trou traversant de partie de tête (412), le trou traversant de partie de tête (412) coopère avec un assemblage d'axe de verrouillage supérieur (5), dans laquelle l'assemblage d'axe de verrouillage supérieur (5) comprend un composant d'axe de verrouillage supérieur (51) et un composant élastique (52), dans laquelle le composant élastique (52) peut être placé à la façon d'un manchon sur le composant d'axe de verrouillage supérieur (51) et peut être inséré à l'intérieur du canal vertical (423) du corps de poignée ou de manche (42) via le trou traversant de partie de tête (412) sur la partie de tête (41) de la poignée ou du manche à ajustement par encliquetage (4).

2. Structure de positionnement à ajustement par encliquetage pour des raccords de tuyaux selon la revendication 1, dans laquelle le corps d'adaptateur (3) est un corps annulaire à sommet plus large et à fond plus étroit, lequel corps est muni d'un rebord à fonction d'appui (33) qui s'étend vers l'intérieur au niveau de son fond.

3. Structure de positionnement à ajustement par encliquetage pour des raccords de tuyaux selon la revendication 1, dans laquelle l'espace de mouvement (425) qui est formé au niveau de la zone avoisinante d'une surface de paroi latérale du corps de poignée ou de manche (42) au niveau du trou de logement (424) présente une structure évidée.

4. Structure de positionnement à ajustement par encliquetage pour des raccords de tuyaux selon la revendication 1, dans laquelle un marquage formant repère de position standard de poussée (426) est agencé sur le corps de poignée ou de manche (42) et un marquage formant repère de position de poussée (732) est également ménagé sur la plaque de positionnement (73) de telle sorte qu'il soit nécessaire de placer le marquage formant repère de position de poussée (732) et le marquage formant repère de position standard de poussée (426) à la même hauteur lors de la poussée vers le haut du corps de plaque (71) ; de telle sorte que dans le cas dans lequel le marquage formant repère de position de poussée (732) est aligné avec le marquage formant repère de position standard de poussée (426), cet alignement indique que la surface de sommet (731) sur la plaque de positionnement (73) du corps de plaque de poussée (71) est venue en butée contre l'intérieur de la première gorge de positionnement (811).

5. Structure de positionnement à ajustement par encliquetage pour des raccords de tuyaux selon la revendication 1, dans laquelle une première surface de venue en butée d'orientation générale verticale (813) et une seconde surface de venue en butée (814) sont formées sur le corps d'arbre (81) de l'arbre de connexion pivotant (8), dans laquelle la première surface de venue en butée (813) et la seconde surface de venue en butée (814) sont localisées à proximité du centre du corps d'arbre (81), ce qui permet par voie de conséquence la venue en butée du composant d'axe de verrouillage supérieur (51) contre ces surfaces de venue en butée.

6. Structure de positionnement à ajustement par encliquetage pour des raccords de tuyaux selon la revendication 5, dans laquelle, pour réaliser la commutation de la poignée ou du manche à ajustement par encliquetage (4) par passage de l'état bloqué à l'état débloqué, il est nécessaire de déplacer l'élément de poussée (7) vers le bas d'une distance qui est telle que la surface de sommet (731) de la plaque de positionnement (73) sur le corps de plaque de poussée (71) puisse être détachée de la première gorge de positionnement (811), puis de déplacer l'élément de poussée (7) vers le haut de telle sorte que le composant d'axe de verrouillage supérieur (51) puisse réaliser une transition à partir de la première surface de venue en butée (813) de telle sorte qu'il soit déplacé et qu'il vienne en butée contre la seconde surface de venue en butée (814), et que, lorsque la surface de sommet (731) de la plaque de positionnement (73) sur le corps de plaque de poussée (71) vient en butée contre l'intérieur de la seconde gorge de positionnement (812), il soit possible de permettre que l'élément d'encliquetage (421) de la poignée ou du manche à ajustement par encliquetage (4) soit écarté de l'intérieur du trou d'encliquetage (37) qui est ménagé à l'intérieur du corps d'adaptateur (3).

7. Structure de positionnement à ajustement par encliquetage pour des raccords de tuyaux selon la revendication 5, dans laquelle, pour réaliser la commutation de la poignée ou du manche à ajustement par encliquetage (4) par passage de l'état débloqué à l'état bloqué, il est nécessaire de déplacer le corps de plaque de poussée vers le bas d'une distance qui est telle que, au moyen de la surface de guidage sur la plaque de positionnement (73) du corps de plaque de poussée (71), la surface de sommet (731) de la plaque de positionnement (73) sur le corps de plaque de poussée (71) puisse être détachée de l'intérieur de la seconde gorge de positionnement (812) afin de déplacer la poignée ou le manche à ajustement par encliquetage (4), et que le composant d'axe de verrouillage supérieur (51) puisse réaliser une transition à partir de la seconde surface de venue en butée (814) de telle sorte qu'il soit déplacé et qu'il vienne en butée contre la première surface de venue en butée (813), et que, lorsque la surface de sommet (731) de la plaque de positionnement (73) sur le corps de plaque de poussée (71) vient en butée contre l'intérieur de la première gorge de positionnement (811), il soit possible d'insérer la surface de sommet (731) du corps de plaque de poussée (71) à l'intérieur de la première gorge de positionnement (811) de l'arbre de connexion pivotant (8) en utilisant la force élastique qui provient du composant élastique (62), d'où par voie de conséquence l'insertion de façon ferme de la poignée ou du manche à ajustement par encliquetage (4) à l'intérieur du trou d'encliquetage (37) du corps d'adaptateur (3).

8. Structure de positionnement à ajustement par encliquetage pour des raccords de tuyaux selon la revendication 7, dans laquelle la surface de sommet (731) de la plaque de positionnement (73) est une surface de guidage inclinée qui opère de façon collaborative avec la surface externe incurvée de l'arbre de connexion pivotant (8).
